# EUROPEAN PATENT SPECIFICATION

(11) **EP 0 543 187 B1**
(45) Date of publication and mention of the grant of the patent: **11.09.1996**
(21) Application number: 92118437.0
(22) Date of filing: 28.10.1992
(51) Int. Cl.: B60T 8/42, B60T 8/50

(54) **A method of vacuum charging an antilocking brake system**
Methode zum Befüllen einer blockiergeschützten Bremsanlage unter Vakuum
Méthode pour charger sous vide un système de freinage antiblocage

(30) Priority: 19.11.1991 JP 94776/91 U
(43) Date of publication of application: 26.05.1993
(73) Proprietor: SUMITOMO ELECTRIC INDUSTRIES, LIMITED, Osaka 541 (JP)
(72) Inventor: Nishikimi, Makoto, c/o Itami Works of, Itami-shi, Hyogo (JP); Oka, Yoshiyuki, c/o Osaka Gijutsu Center Co., Ltd., 3-chome, Kita-ku, Osaka (JP)
(74) Representative: Kirschner, Klaus Dieter, Dipl.-Phys.

(56) References cited:
- EP-A- 0 303 261
- EP-A- 0 361 502
- EP-A- 0 478 933
- DE-A- 2 128 168
- DE-A- 2 643 860
- DE-A- 3 534 240
- DE-A- 4 004 316
- GB-A- 1 590 003
- GB-A- 2 193 770
- GB-A- 2 219 055
- US-A- 4 938 545

## Description

### BACKGROUND OF THE INVENTION

### Field of the Invention

The present invention relates to a method of vacuum charging an antilocking brake system for a vehicle, and more particularly, it relates to a method of vacuum charging an antilocking brake system which is adapted to suck/pressurize a working fluid being discharged from a main fluid passage with a pump for returning the same to the main fluid passage.

### Description of the Background Art

An antilocking brake system for a vehicle according to the present invention is located between a master cylinder which is directly coupled with a brake pedal and a piston which is directly coupled with a wheel brake in a braking system for an automobile, for controlling the braking system in an antilocking manner. When a wheel speed detector or a body speed detector detects an excessive slip caused by overbraking or an indication thereof, the antilocking brake system drives electromagnetic valves to reduce or control the brake fluid pressure, thereby suppressing/controlling the braking force to an optimum level.

In relation to such an antilocking brake system, there has already been developed a rotary flow type unit, which is adapted to feed back a brake working fluid, being discharged from a wheel cylinder of a wheel brake, by a pump provided on an intermediate portion of a circulation passage for reusing the same. In such a rotary flow type antilocking brake system, however, a working noise of the pump, vibration of a piping system caused by pulsation of the working fluid in the circulation passage and a following working noise, or vibration of the pedal inevitably leads to a large noise.

In order to solve such a problem, British Patent No. 1,590,003, for example, discloses a system which comprises a damping chamber provided between an outlet port of a pump and a feedback point for storing a constant volume of a working fluid and an orifice provided in the vicinity of the outlet of this damping chamber for damping pulsation of the pump through compressibility of the working fluid.

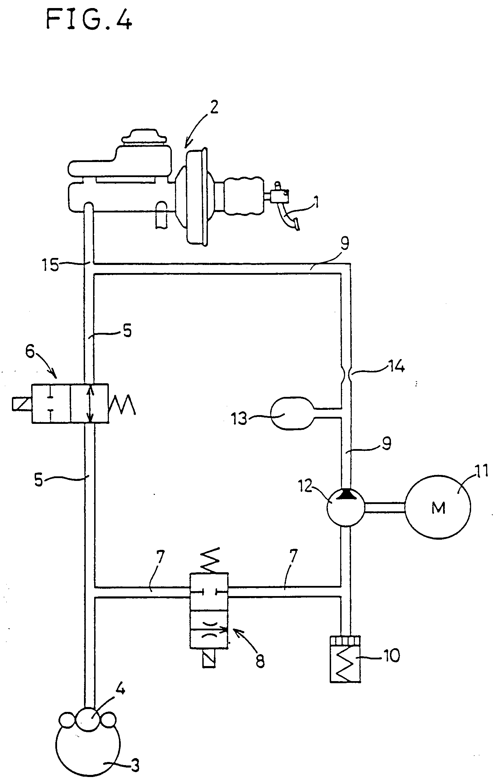

The antilocking brake system according to the aforementioned prior art is applied to a braking system shown in Fig. 4, for example. Fig. 4 shows only an antilocking brake system interposed between a master cylinder 2 which is directly coupled with a brake pedal 1 and a wheel cylinder 4 of a wheel brake 3 for performing an antilocking operation. In practice, however, the master cylinder 2 is connected also with other antilocking brake systems which are interposed between the same and other three wheels. In the antilocking brake system shown in Fig. 4, a two-port two-position electromagnetic valve 6 for controlling introduction of a working fluid is provided on an intermediate portion of a main fluid passage 5 connecting a master cylinder 2 with a wheel cylinder 4 of a wheel brake 3. This electromagnetic valve 6 is closed only when the same is supplied with power, and maintained in an open state when the same is supplied with no power. A circulation passage 7 branches from the main fluid passage 5, so that another two-port two-position electromagnetic valve 8 is provided on an intermediate portion thereof for controlling discharge of the working fluid. This electromagnetic valve 8 is opened only when the same is supplied with power, and maintained in a closed state when the same is supplied with no power. Another circulation passage 9 is provided between a downstream end of the circulation passage 7 and a feedback point 15 on an upstream portion of the main fluid passage 5, while a reservoir 10 is provided on a coupling portion 19 between the circulation passages 7 and 9 for storing the working fluid, which is discharged from the wheel cylinder 4 to flow through the circulation passage 7.

The circulation passage 9 is provided with a pump 12 which is driven by a motor 11, while a damping chamber 13 for storing a constant volume of the working fluid and an orifice 14 are provided on its downstream side.

The operation of the conventional antilocking brake system having the aforementioned structure is now described. When leg power is applied to the brake pedal 1, the master cylinder 2 converts this power to the fluid pressure of the working fluid in response to the amount of actuation. If the unit is in a non-antilocking state, the electromagnetic valves 6 and 8, being supplied with no power, are in open and closed states respectively. When leg power is applied to the brake pedal 1 in this state, therefore, the fluid pressure which is converted by the master cylinder 2 in response to the amount of actuation is supplied through the main fluid passage 5 to the wheel cylinder 4 of the wheel brake 3, to drive the wheel brake 3.

When a wheel speed detector or a body speed detector detects an overbraking operation, this unit receives an electric signal to enter an antilocking state, thereby supplying power to both electromagnetic valves 6 and 8.

Therefore, the electromagnetic valves 6 and 8 enter open and closed states respectively to cut off the fluid pressure from the master cylinder 2 and open the circulation passage 7, thereby attaining a decompressed state in the wheel cylinder 4 of the wheel brake 3. Thus, the unit is prevented from a locking state caused by an overbraking operation.

In order to re-pressurize the brake fluid pressure, the power supply is stopped to open and close the electromagnetic valves 6 and 8 respectively. In order to maintain the brake fluid pressure at a constant level, further, power is supplied only to the electromagnetic valve 6 for closing the same, while no power is supplied to the electromagnetic valve 8 for maintaining the same in the closed state. Consequently, portions of the main fluid passage 5 and the circulation passage 7 are sealed around the wheel brake 3, to maintain the fluid pressure at a constant level.

The working fluid discharged through the circulation passage 7 and the electromagnetic valve 8 during the antilocking operation is temporarily stored in the reservoir 10. The pump 12 appropriately sucks the working fluid thus stored in the reservoir 10, and returns the same to the feedback point 15 through the circulation passage 9, thereby reusing the working fluid. At this time, the damping chamber 13 and the orifice 14 provided immediately at the back of the pump 12 absorb pressure fluctuation which is caused by pulsation of the pump 12, to relieve influence on piping of the circulation passage 9.

However, the rotary flow type antilocking brake system of the aforementioned structure has the following problems:

In a step of assembling a vehicle, a brake piping system is temporarily evacuated and then charged with a working fluid under pressure through the so-called vacuum charging, so that air is bled from the piping system. If the working fluid remains in the brake piping system, a desired degree of vacuum cannot be attained since the remaining working fluid is vaporized upon exhaust. Also in the antilocking brake system shown in Fig. 4, it is necessary to discharge the working fluid after charging the same in the manufacturing step for performance investigation. In this case, it is difficult to discharge the working fluid from the damping chamber 13, due to provision of the orifice 14. This problem is particularly remarkable when the damping chamber 13 is provided in the vicinity of the orifice 14. In order to completely discharge the working fluid from the damping chamber 13, a fluid discharge port may be provided to be sealed with a tap after discharging the working fluid. In this case, however, the cost is increased.

In the service market, further, it takes a long time to bleed air only through force-feed power caused by leg power which is applied to the brake pedal due to an inferior air bleeding property. The term "service market" herein used indicates a market in which a general dealer recombines parts of an abnormal automobile in accordance with a service manual.

In order to solve the aforementioned problems caused in relation the vacuum charging or the working fluid in the brake piping system, a technique proposed in Japanese Utility Model Laying-Open No. 1-103467 (1989), for example, may be applied to provide a check valve on a portion of the circulation passage 9 between the pump 13 and the feedback point 15 to allow only a flow of the brake fluid from the pump 12 toward the feedback point 15. However, such employment of a high-priced check valve also leads to increase in cost.

An antilocking brake system with the features of the preamble of appended claim 1 is known from GB-A-2219055.

GB-A-2193770 discloses another hydraulic system with slip control comprising a pressure accumulator, a hydraulic pump, a non-return valave and a brake power booster, the pressure outlet of the pump beeing connected with the pressure accumulator and with an inlet of the brake power booster via the non-return valve, the outlet side of the non-return valve is connected with the inlet of the brake booster via the pressure accumulator.

### SUMMARY OF THE INVENTION

An object of the present invention is to simplify air bleeding of a brake piping system in a step of assembling a vehicle, thereby reducing the time for a step of charging a working fluid.

Another object of the present invention is to enable air bleeding of a main fluid passage in a service market only through force-feed power caused by leg power which is applied to a brake pedal, with no remarkable increase in cost.

In order to attain the aforementioned objects, a method according to claim 1 is provided.

According to the aforementioned system of GB-A-2219055 the filter is provided on a portion of the circulation passage between the damping chamber and the feedback point. Even if the damping chamber which is closer to the pump as compared with the filter is charged with the working fluid, therefore, a mesh forming the filter is wetted with the working fluid to effectuate surface tension of the working fluid if the working fluid is discharged from only a portion on the feedback point side of the filter. According to the present invention, when the piping system is evacuated for vacuum charging, the surface tension so overcomes the vacuum suction force that the working fluid stored in the damping chamber is not sucked beyond the filter. Consequently, a desired degree of vacuum can be easily attained.

Also in the service market, further, it is possible to easily bleed air from the main fluid passage only through force-feed power caused by leg power which is applied to the brake pedal, since the damping chamber is filled up with the working fluid.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 typically illustrates the structure of an antilocking brake system for vacuum charging according to the present invention;
Fig. 2 typically illustrates the structure of another antilocking brake system for vacuum charging according to the present invention;
Figs. 3A and 3B are sectional views successively showing positional relation between a cylinder block 22 and a spool 23 of a control valve 21 according to the another antilocking braking system in an antilocking state;
Fig. 4 typically illustrates the structure of a conventional rotary flow type antilocking brake system; and
Fig. 5A is a plan view showing a filter 16 provided between a damping chamber 13 and a feedback point 15, and Fig. 5B is a sectional view taken along the line A - A in Fig. 5A.

### DESCRIPTION OF THE PREFERRED EMBODIMENTS

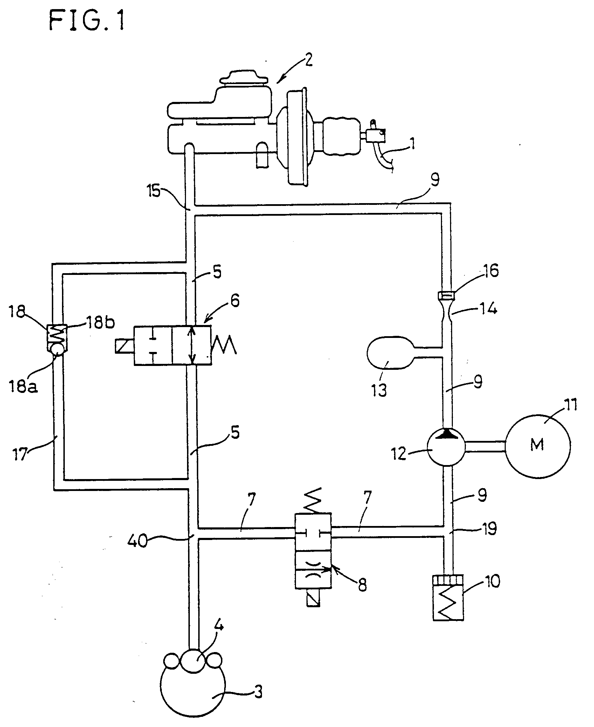

The first antilocking brake system for vacuum charging is now described with reference to Fig. 1.

Referring to Fig. 1, an antilocking brake system according to a first arrangement is interposed between a master cylinder 2 which is directly coupled with a brake pedal 1 and a wheel cylinder 4 of a wheel brake 3. In practice, the master cylinder 2 is also connected with other antilocking brake systems (not shown) which are interposed between the same and other three wheel brakes (not shown). In the antilocking brake systems according to this embodiment, a two-port two-position electromagnetic valve 6 for controlling introduction of a working fluid is provided on an intermediate portion of a main fluid passage 5 connecting the master cylinder 2 with the wheel cylinder 4 of the wheel brake 3. This electromagnetic valve 6 is closed only when the same is supplied with power, and maintained in an open state when the same is supplied with no power. A circulation passage 7 branches from the main fluid passage 5, so that another two-port two-position electromagnetic valve 8 is provided on an intermediate portion thereof for controlling discharge of the working fluid. This electromagnetic valve 8 is opened only when the same is supplied with power, and maintained in a closed state when the same is supplied with no power. Another circulation passage 9 is provided between a downstream end of the circulation passage 7 and an upstream portion of the main fluid passage 5, while a reservoir 10 is provided on a coupling portion 19 between the circulation passages 7 and 9 for storing the working fluid, which is discharged from the wheel cylinder 4 to flow through the circulation passage 7.

The circulation passage 9 is provided with a pump 12 which is driven by a motor 11, while a damping chamber 13 for storing a constant volume of the working fluid and an orifice 14 are provided on a downstream side thereof.

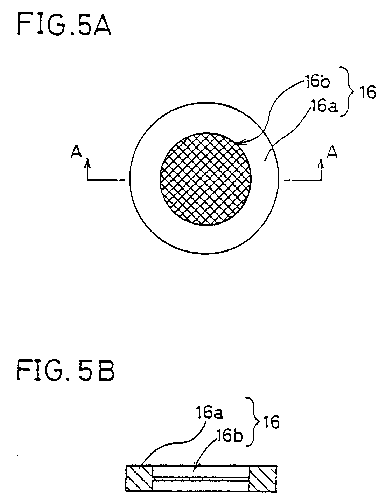

The aforementioned structure is similar to that of the conventional antilocking system shown in Fig. 4. This arrangement is different from the above prior art in a point that a filter 16 is provided immediately on a downstream side of the orifice 14. As shown in Figs. 5A and 5B, this filter 16 is provided with a cylindrical frame 16a having a through hole and a circular sheet type mesh 16b which is mounted on this frame 16a. As to the roughness of the mesh 16b, each opening thereof is □20 µm to □30 µm, preferably about □25 µm in size.

The function of this filter 16 is as follows: When the working fluid is bled from the main fluid passage 5 and the circulation passage 7 after the working fluid adheres to the mesh 16b, the fluid is bled only from a portion on the feedback point 15 side of the mesh 16b, while a portion on the damping chamber 13 side of the mesh 16b is filled up with the working fluid. Further, the working fluid adheres to each opening of the mesh 16b of the filter 16 by its surface tension. When evacuation is performed in this stage for vacuum-charging the working fluid in a step of assembling a vehicle, the surface tension of the working fluid overcomes the vacuum suction force, whereby the brake working fluid stops flowing out from the damping chamber 13 toward the feedback point 15. Thus prevented are disadvantageous phenomenons such as boiling of the working fluid in the circulation passage 9 and air residual in charging of the working fluid.

Further, a bypass passage 17 is provided in parallel with the main fluid passage 5, and a check valve 18 is provided on this bypass passage 17. The check valve 18 comprises a spherical valve 18a which is urged by a spring 18b with prescribed force along a forward direction from the wheel brake 3 toward the feedback point 15.

The operation of the antilocking brake system according to the first arrangement having the aforementioned structure is now described. When leg power is applied to the brake pedal 1, the master cylinder 2 converts this power to the fluid pressure of the working fluid in response to the amount of actuation. In a non-antilocking operation of this system, the electromagnetic valves 6 and 8, being supplied with no power, are in open and closed states respectively. When leg power is applied to the brake pedal 1 in this state, therefore, the fluid pressure which is converted by the master cylinder 2 in response to the amount of actuation is supplied through the main fluid passage 5 to the wheel cylinder 4 of the wheel brake 3, thereby driving the wheel brake 3.

When a wheel speed detector or a body speed detector detects an overbraking operation, this unit receives an electric signal to enter an antilocking state, thereby supplying power to the electromagnetic valves 6 and 8. Thus, the electromagnetic valves 6 and 8 enter closed and open states respectively to cut off the fluid pressure from the master cylinder 2 and open the circulation passage 7 for discharge, thereby attaining a decompressed state in the wheel cylinder 4 of the wheel brake 3. Thus, the unit is prevented from a locking state caused by an overbraking operation.

When a pressure stronger than the urging force of the check valve 18 is applied into the main fluid passage 5 before operations of the electromagnetic valves 6 and 8, the check valve 18 is so opened that the working fluid flows back to the upstream side through the bypass passage 17, thereby preventing the unit from a locking state.

In order to thereafter increase the brake fluid pressure again, the power supply is stopped to bring the electromagnetic valves 6 and 8 into open and closed states respectively. In order to maintain the working fluid pressure at a constant level, further, power is supplied only to the electromagnetic valve 6 to bring the same into a closed state, while no power is supplied to the electromagnetic valve 8 to maintain the same in an open state. As the result, portions of the main fluid passage 5 and the circulation passage 7 around the wheel brake 3 are so sealed that the working fluid contained therein is maintained at a constant pressure.

In the antilocking state, the working fluid discharged through the circulation passage 7 and the electromagnetic valve 8 is temporarily stored in the reservoir 10. The working fluid thus stored in the reservoir 10 is appropriately sucked by the pump 12 and returned to the feedback point 15 through the circulation passage 9, to be reused as the brake fluid. At this time, pressure fluctuation caused by pulsation of the pump 12 is absorbed by the damping chamber 13 and the orifice 14 which are provided immediately at the back of the pump 12, whereby influence on piping of the circulation passage 9 is relieved.

According to this arrangement, portions of the circulation passages 7 and 9 between the electromagnetic valve 8 and the filter 16 as well as the damping chamber 13 are filled up with the working fluid when the brake device is delivered into a step of assembling a vehicle. In order to vacuum-charge the working fluid in the step of assembling a vehicle, therefore, air may be bled simply from the main fluid passage 5 and portions of the circulation passages 7 and 9 other than those between the electromagnetic valve 8 and the filter 16. The damping chamber 13, which has been particularly problematic in the conventional vacuum charging, is already filled up with the working fluid, and hence no problem is caused by vaporization of the working fluid in the damping chamber 13 etc.

According to the arrangement, as hereinabove described, the portions between the electromagnetic valve 8 and the filter 17 are filled up with the working fluid, whereby a desired vacuum state can be easily attained for vacuum-charging the working fluid in the step of assembling a vehicle, while it is possible to bleed air only through force-feed power caused by leg power which is applied to the brake pedal 1 in the service market.

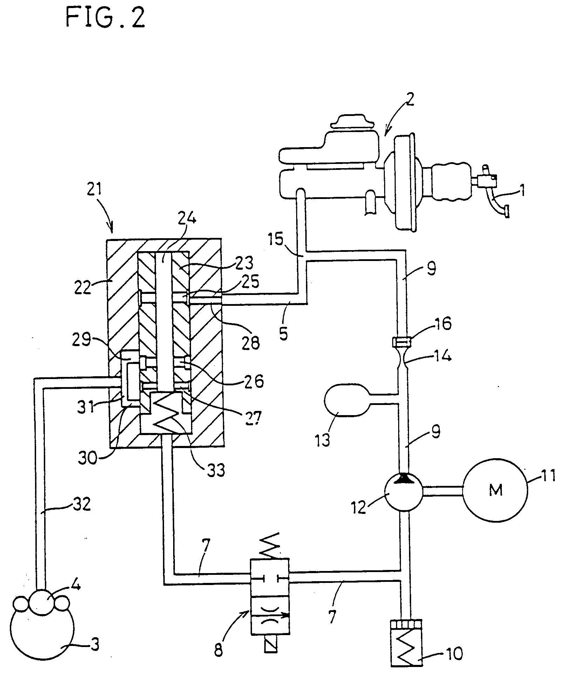

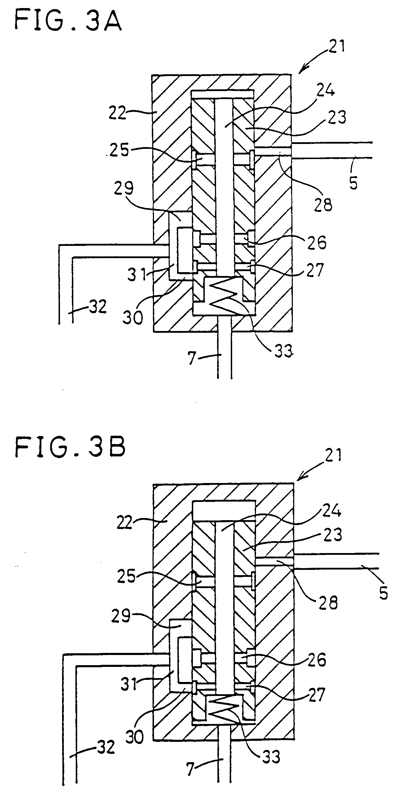

The second antilocking brake system for vacuum charging is now described with reference to Figs. 2, 3A and 3B.

This second arrangement is identical to the first arrangement in the structure of a portion between a downstream side of an electromagnetic valve 8 and a feedback point 15. This arrangement is different from the first arrangement in a point that a control valve 21 having no electromagnetic operation is employed in place of the electromagnetic valve 6 on a working fluid inlet control side. This control valve 21 comprises a hollow cylinder block 22 and a spool 23 slidably arranged therein. The spool 23 has a first fluid passage 24 passing through the same along its central axis, and second, third and fourth fluid passages 25, 26 and 27 communicating with the first fluid passage 24 diametrally along the spool 23. The cylinder block 22 is provided with an inlet passage 28, which is directly coupled with a main fluid passage 5, along its diametral direction. The cylinder block 22 is further provided along its diametral direction with first and second outlet passages 29 and 30, which are coupled with each other by an outlet 31. This outlet 31 is directly coupled to a passage 32, which is connected to a wheel cylinder 4 of a wheel brake 3.

The operation of the antilocking brake system according to this arrangement is now described. In a non-antilocking state of this arrangement, the cylinder block 22 and the spool 23 are in the relative positional relation shown in Fig. 2 to each other. In other words, the spool 23 is urged by a spring 33 to be pressed against the upper end of the cylinder block 22, thereby maintaining the electromagnetic valve 8 in a state supplied with no power, i.e., a closed state. When leg power is applied to a brake pedal 1 in this state, a master cylinder 2 converts this power to a fluid pressure, whereby the working fluid passes through the main fluid passage 5, the inlet passage 28 and the second fluid passage 25, to enter the first fluid passage 24. Thereafter the working fluid further flows through the third fluid passage 27, the first outlet passage 29, the outlet 31 and the passage 32 to reach the wheel cylinder 4, thereby driving the wheel brake 3.

When a wheel speed detector (not shown) or the like detects an excessive slip or an indication thereof and the unit enters an antilocking state, the electromagnetic valve 8 is first supplied with power to enter an open state. As the result, the working fluid can flow out from the wheel cylinder 4 through the electromagnetic valve 8, whereby pressure difference is caused between the upper and lower end surfaces of the spool 23. Due to urging force based on this pressure difference, the spool 23 is downwardly moved against urging force of the spring 33, to attain positional relation shown in Fig. 3A. In this state, communication between the third fluid passage 26 and the first outlet passage 29 is cut off while the fourth fluid passage 27 is also cut off from communication with the second outlet passage 30, whereby supply of the working fluid to the wheel brake 3 is stopped.

When the working fluid further flows out from the electromagnetic valve 8 and the spool 23 reaches the downward position shown in Fig. 3B, the fourth fluid passage 27 communicates with the second outlet passage 30. When the electromagnetic valve 8 enters a state supplied with no power, i.e., a closed state, the working fluid in the wheel cylinder 4 is sealed and maintained at a constant pressure. When the brake pedal 1 is released, the pressure difference between the upper and lower ends of the spool 23 is inverted to upwardly move the spool 23, which is returned to the state shown in Fig. 2.

According to each of the arrangements, as hereinabove described, the filter is so provided between the damping chamber and the feedback point that the unit can be easily evacuated in a step of vacuum-charging a working fluid in a brake piping system in a step of assembling a vehicle with no employment of high-priced mechanical parts, whereby the vacuum charging step is improved in workability and the time therefor is reduced.

Also in a service market, air can be easily bled only through force-feed power caused by leg power which is applied to the brake pedal, whereby maintenance in the service market can be easily attained.

Although the present invention has been described and illustrated in detail, it is clearly understood that the same is by way of illustration and example only and is not to be taken by way of limitation, the scope of the present invention being limited only by the terms of the appended claims.

## Claims

1. A method of vacuum charging an antilocking brake system for a vehicle with a working fluid, said system being provided at an intermediate position of a main fluid passage (5) connecting a master cylinder (2), being coupled with a brake pedal (1), and a wheel brake (3), said antilocking brake system comprising:
fluid pressure control means (6, 8, 21) receiving an antlocking operation signal and discharging a working fluid from said main fluid passage (5), thereby controlling the fluid pressure on said wheel brake (3);
a pump (11) for returning said working fluid to said main fluid passage (5)
a circulation passage (7, 9) connecting a feedback point (15) positioned in the vicinity of an end of said main fluid passage (5) being closer to said master cylinder (2) with a branch portion (21, 40) located at a position of said main fluid passage (5) being closer to said wheel brake (3) than said feedback point (15); said pump (11) being located in said circulation passage (7, 9); and
a damping chamber (13) provided at a position of said circulation passage (9) between said pump (12) and said feedback point (15) for storing a constant volume of said working fluid,
said circulation passage (9) being provided with a filter (16) at a position between said damping chamber (13) and said feedback point (15)
**characterized in that**
when the piping system is evacuated for vacuum charging, the surface tension of the working fluid so overcomes the vacuum suction force that the working fluid stored in the damping chamber is not sucked beyond the filter (16).

2. A method in accordance with claim 1, wherein said filter (16) includes a frame (16a) having a through hole and a mesh (16b) of prescribed opening being mounted to cover said throughhole of said frame (16a).

3. A method in accordance with claim 1, wherein each opening of said mesh (16b) is □20 µm to □30 µm in size.

4. A method in accordance with claim 1, wherein said fluid pressure control means (6, 8, 21) includes:
a first electromagnetic valve (6) provided at a position of said main fluid passage (5) between said feedback point (15) and said branch portion (40), and
a second electromagnetic valve (8) provided at a position of said circulation passage (7, 9) between said branch portion (21, 40) and said pump (12).

5. A method in accordance with claim 4, wherein said first electromagnetic valve (6) enters a closed state only when the same is supplied with power and is maintained in an open state when the same is supplied with no power, and
said second electromagnetic valve (8) enters an open state only when the same is supplied with power and is maintained in a closed state when the same is supplied with no power.

6. A method in accordance with claim 4, wherein said main fluid passage (5) is provided with a bypass passage (17) coupling upstream and downstream sides of said first electromagnetic valve (6) with each other, said bypass passage having a check valve (17) for returning back said working fluid from said downstream side toward said upstream side of said first electromagnetic valve (6) only when a brake fluid pressure exceeds a prescribed value.

7. A method in accordance with claim 1, wherein a reser-voir (10) is provided at position of said circulation passage (7, 9) between said fluid pressure control means (6, 8, 21) and said pump (11) for storing said working fluid flowing out from said main fluid passage

8. A method in accordance with claim 1, wherein said fluid pressure control means (6, 8, 21) includes:
a control valve (21) arranged in said branch portion (21, 40) to be driven by differential pressure of said working fluid, and
an electromagnetic valve (8) provided at a position of said circulation passage (7, 9) between said control valve (21) and said pump (12).

9. A method in accordance with claim 8, wherein said control valve (21) is adapted to cut off energization of said main fluid passage (5) only when a braking pressure exceeds a prescribed value,
said electromagnetic valve (8) being energized to enter an open state only when said braking pressure exceeds said prescribed value.

10. A method in accordance with claim 1, wherein a flow restriction orifice (14) is provided at a position of said circulation passage (7, 9) between said damping chamber (13) and said feedback point (15).

11. A method in accordance with claim 10, wherein said filter (16) is provided on said feedback point (15) side of said orifice (14) to be adjacent to said orifice (14).

12. A method in accordance with any of the preceding claims characterized by a control valve (21) provided on said branch portion (21) to be driven by differential pressure of said working fluid caused between the pressure driving the wheel brake (3) and the pressure of the master cylinder (2).

13. A method in accordance with claim 12, wherein said control valve (21) is adapted to cut off energization of said main fluid passage (5) only when a braking pressure exceeds a prescribed value,
said electromagnetic valve (8) being energized to enter an open state only when said braking pressure exceeds said prescribed value.

## Patentansprüche

1. Verfahren zum Befüllen einer blockiergeschützten Bremsanlage unter Vakuum für ein Fahrzeug mit einer Arbeitsflüssigkeit, wobei die Anlage in einer Zwischenposition eines Hauptflüssigkeitsdurchlaufes (5) angeordnet ist, der einen Hauptzylinder (2), der mit einem Bremspedal (1) gekoppelt ist, und eine Radbremse (3) verbindet, wobei die blockiergeschützte Bremsanlage umfaßt:
Flüssigkeitsdrucksteuerungseinrichtung (6, 8, 21), die ein blockiergeschütztes Bedienungssignal empfängt und die eine Arbeitsflüssigkeit aus dem Hauptflüssigkeitsdurchlauf (5) entleert, wodurch der Flüssigkeitsdruck in der Radbremse (3) gesteuert wird;
eine Pumpe (11) zum Zurückbringen der Arbeitsflüssigkeit zu dem Hauptflüssigeitsdurchlauf (5);
ein Zirkulationsdurchlauf (7, 9), der mit einem Rückführungspunkt (15), der in der Nachbarschaft von einem Ende des Hauptflüssigkeitsdurchlaufes (5) angeordnet ist, die näher zu dem Hauptzylinder (2) ist, mit einem Abzweigteil (21, 40), das in einer Position des Hauptflüssigkeitsdurchlaufes (5) angeordnet ist, die näher an der Radbremse (3) als der Rückführungspunkt (15) ist, verbunden wird;
wobei die Pumpe (11) in dem Zirkulationsdurchlauf (7, 9) angeordnet ist; und eine Dämpfungskammer (13), die in einer Position des Zirkulationsdurchlaufes (9) zwischen der Pumpe (12) und dem Rückführungspunkt (15) zum Speicher eines konstanten Volumens der Arbeitsflüssigkeit angeordnet ist;
wobei der Zirkulationsdurchlauf (9) mit einem Filter (16) in einer Position zwischen der Dämpfungskammer (13) und dem Rückführungspunkt (15) angeordnet ist,
**gekennzeichnet dadurch, daß**
wenn das Rohrleitungssystem zum Befüllen unter Vakuum entleert wird, so überbrückt die Oberflächenspannung der Arbeitsflüssigkeit die Vakuumsaugkraft, so daß die Arbeitsflüssigkeit, die in der Dämpfungskammer gespeichert ist, nicht über den Filter (16) eingesaugt wird.

2. Verfahren nach Anspruch 1, worin der Filter (16) einen Rahmen (16a), der ein Durchgangsloch hat, und ein Gitter (16b) mit vorgeschriebener Öffnung, das befestigt ist, um das Durchgangsloch des Rahmens (16a) abzudecken, beinhaltet.

3. Verfahren nach Anspruch 1, worin jede Öffnung des Gitters (16b) 20µm² bis 30µm² in ihrer Größe ist.

4. Verfahren nach Anspruch 1, worin die Flüssigkeitsdrucksteuerungseinrichtung (6, 8, 21) beinhaltet:
ein ersten elektromagnetisches Ventil (6), das in einer Position des Hauptflüssigkeitsdurchlaufes (5) zwischen dem Rückführungspunkt (15) und dem Abzweigteil (40) angeordnet ist, und
ein zweites elektromagnetisches Ventil (8), das in einer Position des Zirkulationsdurchlaufes (7, 9) zwischen dem Abzweigteil (21, 40) und der Pumpe (12) angeordnet ist.

5. Verfahren nach Anspruch 4, worin das erste elektromagnetische Ventil (6) einen geschlossenen Zustand nur dann einnimmt, wenn dasselbige mit Strom versorgt wird und in einem geöffneten Zustand gehalten wird, wenn dasselbige mit keinem Strom versorgt wird, und
das zweite elektromagnetische Ventil (8) einen geöffneten Zustand nur dann einnimmt, wenn dasselbige Strom versorgt wird und einen geschlossenen Zustand aufrecht erhält, wenn dasselbige mit keinem Strom versorgt wird.

6. Verfahren nach Anspruch 4, worin der Hauptflüssigkeitsdurchlauf (5) mit einem Nebenwegdurchlauf (17) ausgestattet ist, der die Aufwärtsstrom- und Abwärtsstromseiten des ersten elektromagnetischen Ventiles (6) mit einander koppelt, wobei der Nebenwegdurchlauf ein Prüfventil (17) zum Zurückströmen der Arbeitsflüssigkeit von der Abwärtsstromseite in Richtung der Aufwärtsstromseite des ersten elektromagnetischen Ventiles (6) nur dann, wenn ein Bremsflüssigkeitsdruck den vorgeschriebenen Wert überschreitet, hat.

7. Verfahren nach Anspruch 1, worin ein Reservoir (10) in einer Position des Zirkulationsdurchlaufes (7, 9) zwischen der Flüssigkeitsdrucksteuerungseinrichtung (6, 8, 21) und der Pumpe (11) zum Speicher der Arbeitsflüssigkeit, die von dem Hauptflüssigkeitsdurchlauf herausfließt, ausgestattet ist.

8. Verfahren nach Anspruch 1, worin die Flüssigkeitsdrucksteuerungseinrichtung (6, 8, 21) beinhaltet:
ein Steuerungsventil (21), das in dem Abzweigeteil (21, 40) angeordnet ist, um den durch den Differentialdruck der Arbeitsflüssigkeit angetrieben zu werden und
ein elektromagnetisches Ventil (8), das in einer Position des Zirkulationsdurchlaufes (7, 9) zwischen dem Steuerungsventil (21) und der Pumpe (12) angeordnet ist.

9. Verfahren nach Anspruch 8, worin das Steuerungsventil (21) angeschlossen ist, um die Bremsverstärkung des Hauptflüssigkeitsdurchlaufes (5) nur dann abzustellen, wenn ein Bremsdruck einen vorgeschriebenen Wert überschreitet, das elektromagnetische Ventil (8) nur dann angeregt wird, einen offenen Zustand einzunehmen, wenn der Bremsdruck den vorgeschriebenen Wert überschreitet.

10. Verfahren nach Anspruch 1, worin eine Flußdrosselungsöffnung (14) in einer Position des Zirkulationsdurchlaufes (7, 9) zwischen der Dämpfungskammer (13) und dem Rückführungspunkt (15) angeordnet ist.

11. Verfahren nach Anspruch 10, worin der Filter (16) auf der Rückführungspunktseite (15) der Öffnung (14) angeordnet ist, um mit der Öffnung (14) aneinander zu grenzen.

12. Verfahren nach jedem der vorangegangenen Ansprüche, gekennzeichnet durch ein Steuerungsventil (21), das auf einem Abzweigteil (21) angeordnet ist, um durch den Differentialdruck der Arbeitsflüssigkeit angetrieben zu werden, der zwischen dem Druck, der die Radbremse (3) antreibt und dem Druck des Hauptzylinders (2) verursacht wird.

13. Verfahren nach Anspruch 12, worin das Steuerungsventil (21) angeschlossen wird, um die Bremskraftverstärkung des Hauptflüssigkeitsdurchlaufes (5) nur dann abzustellen, wenn ein Bremsdruck einen vorgeschriebenen Wert überschreitet,
das elektromagnetische Ventil (8) nur dann dazu angeregt wird, einen offenen Zustand einzunehmen, wenn der Bremsdruck den vorgeschriebenen Wert überschreitet.

## Revendications

1. Procédé pour charger sous vide un système de freinage anti-blocage pour un véhicule avec un fluide de travail, ce système étant disposé en une position intermédiaire d'un passage de fluide principal (5) reliant un maître-cylindre (2), accouplé à une pédale de frein (1), et un frein à disque (3), ce système de frein anti-blocage comprenant :
des moyens de commande de pression de fluide (6, 8, 21) recevant un signal de fonctionnement anti-blocage et déchargeant un fluide de travail à partir du passage de fluide principal (5), permettant ainsi de réguler la pression de fluide sur le frein à disque (3) ;
une pompe (11) pour renvoyer le fluide de travail vers le passage de fluide principal (5) ;
un passage de circulation (7, 9) reliant un point de rétroaction (15) positionné à proximité d'une extrémité du passage de fluide principal (5) au plus proche du maître-cylindre (2) avec une portion d'embranchement (21, 40) située en une position du passage de fluide principal (5) plus proche du frein à disque (3) que le point de rétroaction (15) ; la pompe (11) étant située dans le passage de circulation (7, 9) ; et
une chambre d'amortissement (13) disposée en une position du passage de circulation (9) entre la pompe (12) et le point de rétroaction (15) pour stocker un volume constant de fluide de travail ;
le passage de circulation (9) étant muni d'un filtre (16) en une position entre la chambre d'amortissement (13) et le point de rétroaction (15)
caractérisé en ce que
lorsque le système de tuyauterie est mis sous vide pour la charge de vide, la tension de surface du fluide de travail vient à bout de la force d'aspiration de vide de sorte que le fluide de travail stocké dans la chambre d'amortissement n'est pas aspiré au-delà du filtre (16).

2. Procédé selon la revendication 1, dans lequel le filtre (16) comprend un châssis (16a) ayant un trou traversant et une maille (16b) d'ouverture prescrite montée pour recouvrir le trou traversant du châssis (16a).

3. Procédé selon la revendication 1, dans lequel chaque ouverture de la maille (16b) est □20 µm jusqu'à □30 µm de taille.

4. Procédé selon la revendication 1, dans lequel les moyens de commande de pression de fluide (6, 8, 21) comprennent :
une première soupape électromagnétique (6) disposée en une position du passage de fluide principal (5) entre le point de rétroaction (15) et la portion d'embranchement (40), et
une seconde soupape électromagnétique (8) disposée en une position du passage de circulation (7, 9) entre la portion d'embranchement (21, 40) et la pompe (12).

5. Procédé selon la revendication 4, dans lequel la première soupape électromagnétique (6) ne se met à l'état fermé que lorsqu'elle est alimentée en puissance et elle est maintenue à l'état ouvert lorsqu'elle n'est pas alimentée en puissance, et
la seconde soupape électromagnétique (8) ne se met à l'état ouvert que lorsqu'elle est alimentée en puissance et elle est maintenue à l'état fermé lorsqu'elle n'est pas alimentée en puissance.

6. Procédé selon la revendication 4, dans lequel le passage de fluide principal (5) est muni d'un passage de dérivation (17) accouplant les côtés amont et aval de la première soupape électromagnétique (6), ce passage de dérivation comportant une soupape d'arrêt (17) pour ne renvoyer le fluide de travail en provenance du côté aval vers le côté amont de la première soupape électromagnétique (6) que lorsque la pression de fluide de freinage dépasse une valeur prédéterminée.

7. Procédé selon la revendication 1, dans lequel il est prévu un réservoir (10) en une position du passage de circulation (7, 9) entre les moyens de commande de pression de fluide (6, 8, 21) et la pompe (11) pour stocker le fluide de travail sortant du passage de fluide principal.

8. Procédé selon la revendication 1, dans lequel les moyens de commande de pression de fluide (6, 8, 21) comprennent :
une soupape de commande (21) disposée dans la portion d'embranchement (21, 40) devant être actionnée par la pression différentielle du fluide de travail, et
une soupape électromagnétique (8) disposée en une position du passage de circulation (7, 9) entre la soupape de commande (21) et la pompe (12).

9. Procédé selon la revendication 8, dans lequel la soupape de commande (21) n'est apte à couper la mise sous tension du passage de fluide principal (5) que lorsque la pression de freinage dépasse une valeur prescrite,
cette soupape électromagnétique (8) étant mise sous tension pour ne se mettre qu'à l'état ouvert que lorsque la pression de freinage dépasse cette valeur prescrite.

10. Procédé selon la revendication 1, dans lequel un orifice d'étranglement de flux (14) est disposé en une position du passage de circulation (7, 9) entre la chambre d'amortissement (13) et le point de rétroaction (15).

11. Procédé selon la revendication 10, dans lequel le filtre (16) est disposé sur le côté du point de rétroaction (15) de l'orifice (14), côté qui doit être contigu à cet orifice (14).

12. Procédé selon l'une quelconque des revendications précédentes, caractérisé par une soupape de commande (21) disposée sur la portion d'embranchement (21) devant être commandée par la pression différentielle du fluide de travail entre la pression entraînant le frein à disque (3) et la pression du maître-cylindre (2).

13. Procédé selon la revendication 12, dans lequel la soupape de commande (21) est apte à ne couper la mise sous tension du passage de fluide principal (5) que lorsque la pression de freinage dépasse une valeur prescrite,
la soupape électromagnétique (8) étant mise sous tension pour n'être à l'état ouvert que lorsque la pression de freinage dépasse cette valeur prescrite.
